# EUROPÄISCHE PATENTSCHRIFT

(11) **EP 0 520 536 B1**
(45) Veröffentlichungstag und Bekanntmachung des Hinweises auf die Patenterteilung: **09.04.1997**
(21) Anmeldenummer: 92201603.5
(22) Anmeldetag: 04.06.1992
(51) Int. Cl.: F02F 3/22

(54) **Gebauter, ölgekühlter Kolben für Dieselmotoren**
Assembled, oil cooled piston for Diesel engines
Piston assemblé refroidi par huile pour moteur Diesel

(30) Priorität: 25.06.1991 DE 4120850
(43) Veröffentlichungstag der Anmeldung: 30.12.1992
(73) Patentinhaber: KOLBENSCHMIDT Aktiengesellschaft, D-74150 Neckarsulm (DE)
(72) Erfinder: Griesbach, Klaus, W-6802 Ladenburg (DE)
(74) Vertreter: Dreiss, Fuhlendorf, Steimle & Becker, Patentanwälte

(56) Entgegenhaltungen:
- EP-A- 0 189 767
- EP-A- 0 285 205
- EP-A- 0 403 767
- FR-A- 954 188
- FR-A- 1 301 299
- FR-A- 2 582 351

## Beschreibung

Die Erfindung betrifft einen gebauten, ölgekühlten Kolben für Dieselmotoren, insbesondere für mittelschnellaufende Dieselmotoren mit hoher Aufladung, bestehend aus einem den Kolbenbolzen aufnehmenden Kolbenkörper und einem die Ringpartie und den Feuersteg tragenden Kolbenboden, die sich über in ihrer Trennungsebene liegende Auflageflächen aufeinander abstützen und die durch in entsprechende Bohrungen eingesetzte Schrauben gegeneinander verspannt sind, wobei zwischen Kolbenkörper und Kolbenboden ein zentraler, kurbelraumseitig mit einer Öffnung versehener Kühlraum besteht. Ein solcher Kolben nach dem Oberbegriff des Anspruchs 1 ist aus der EP-A-0 285 205 bekannt.

Die Erfindung betrifft gleichermaßen einen Kolben nach dem Oberbegriff des Anspruchs 2, bei dem sich Kolbenkörper und Kolbenboden über auf konzentrischen Abstützbunden angeordnete kreisringförmige Auflageflächen aufeinander abstützen und die Abstützbunde die äußere Begrenzung des zentralen Kühlraums und die radial innere Begrenzung eines hinter der Ringpartie verlaufenden Kühlkanals bilden. Ein derartiger Kolben ist aus der EP-A-0 189 767 bekannt.

Bei zunehmender spezifischer Motorleistung genügt die Ölkühlung eines definierten Teils des Kolbens, wie es ein Kühlkanalkolben mit ringförmigem Kühlkanal hinter der Ringpartie erlaubt, nicht mehr. Vielmehr werden Hohlräume benötigt, die alle thermisch hochbeanspruchten Bereiche des Kolbenbodens, der Ringpartie und des Feuerstegs erfassen. Für derartige Einsatzzwecke sind gebaute, ölgekühlte Kolben der eingangs beschriebenen Konstruktionen bekannt, bei denen der Boden aus Stahl oder hochwertigem Gußeisen und der Kolbenkörper aus Aluminium-Silizium-Kolbenlegierung oder Kugelgraphit-Gußeisen besteht. Die Kühlölzufuhr zum Kühlraum erfolgt über entsprechende Öffnungen im Kolbenschaft entweder über Pleuel und Kolbenbolzen oder über eine am Kurbelgehäuse angebrachte Spritzdüse. Die Kühlölzufuhr kann auch in umgekehrter Richtung über eine am kleinen Pleuelauge angebrachte Spritzdüse unmittelbar zum Kühlraum erfolgen.

Da bei der Kolbenbauart nach EP-A-0 285 205 mit flacher Brennraummulde die höchsten Temperaturen des Kolbenbodens von 350 bis > 400°C am äußeren Rand der Brennraummulde und im Bereich des Kolbenbodenrandes auftreten, erstrecken sich von dem Kühlraum aus gegenüber der Trennungsebene der beiden Kolbenbauteile geneigte, radial nach außen verlaufende Sacklochbohrungen bis in den Bereich hinter dem Feuersteg und dem Kolbenbodenrand. Bedingt durch die Pendelbewegung des Kühlöls in den Sacklochbohrungen wird die Wärme von der Innenseite des Kolbens abgeführt. Am halbkugelförmigen Boden der Sacklochbohrungen treten jedoch Temperaturen von 240 bis 270°C auf, die in der Nähe bzw. über dem Flammpunkt üblicher Kühlöle für Dieselmotoren liegen. Das hat zur Folge, daß im Bodenbereich der Sacklochbohrungen das Kühlöl verkokt und sich eine isolierende Ölkohleschicht bildet, die die Kühlwirkung des Kühlöls so herabsetzt, daß die Temperaturen des Kolbenbodens in dem an die Sacklochbohrungen angrenzenden Bereich unzulässig ansteigen und damit die Festigkeit des Kolbenwerkstoffs absinkt, der Kriechwiderstand verringert und die thermische Deformation erhöht werden. Dies kann zu bleibenden Verformungen und den damit verbundenen Nachteilen führen. Darüber hinaus ist die Herstellung der Sacklochbohrungen mit einem erheblichen Aufwand verbunden.

Bei dem aus der EP 0 189 767 A2 bekannten und eingangs beschriebenen Kolben muß das Kolbenoberteil beim Betrieb des Kolbens zusätzlich zu der inneren Ringbundabstützung noch im Bereich der Außenwand abgestützt werden, um eine hinreichende Steifigkeit des Kolbenoberteils zu erreichen. Es ist deshalb erforderlich, bei der Herstellung des Kolbens im kalten Zustand im Bereich der Außenwand von Oberteil und Unterteil einen genau bemessenen Spalt vorzusehen, der sich bei den Betriebstemperaturen des Kolbens schließt und so die zusätzliche äußere Abstützung des Oberteils am Unterteil gewährleistet. Dies erweist sich bei der Herstellung als enorm aufwendig und daher nachteilig.

Es ist die Aufgabe der vorliegenden Erfindung, die vorstehend naher beschriebenen gebauten, ölgekühlten Kolben so zu gestalten, daß eine verbesserte Wärmeübertragung vom Kolben an das Kühlöl sowie eine schnelle Abführung der erwärmten Kühlmittelmenge gewährleistet und die sich in dem Bereich hinter dem Feuersteg und dem Kolbenbodenrand erstreckenden Kühlflächen auf relativ einfachere Weise herstellbar sind.

Ausgehend von dem Kolben gemäß dem Oberbegriff des Anspruchs 2 besteht die Aufgabe, die vorstehend erläuteten Nachteile im Hinblick auf die äußere Ringbundabstützung zu vermeiden.

Die Lösung dieser Aufgabe besteht in einem von dem zentralen Kühlraum (Anspruch 1) bzw. von dem hinter der Ringpartie verlaufenden Kühlkanal (Anspruch 2) bis in den Bereich hinter dem Feuersteg und dem

Kolbenbodenrand verlaufenden Ringraum, dessen Mittelebene gegenüber der Trennungsebene der Kolbenbauteile geneigt ist und in dessen kühlraumseitigem bzw. kühlkanalseitigem Abschnitt mehrere Distanzstücke fest eingefügt sind.

Nach einem weiteren Erfindungsmerkmal ist die Ebene des Ringraums um 20 bis 90°, vorzugsweise 30 bis 80°, gegenüber der Trennungsebene der Kolbenbauteile geneigt. Durch die erfindungsgemäße Maßnahme wird die durch die Pendelwirkung des Kühlöls überströmte Oberfläche vergleichsweise um bis zu 60 % vergrößert, so daß die von der brennraumseitigen Wand des Ringraums durch das Kühlöl pro Zeiteinheit abgeführte Wärmemenge vergleichsweise erheblich größer ist, was zur Folge hat, daß die Temperatur in dem durch zu hohe Temperaturen gefährdeten Bereich deutlich niedriger gehalten werden kann. Eine Verkokung des Kühlöls und damit die Ausbildung einer wärmeisolierenden Koksschicht am Boden des Ringraums unterbleibt als Folge der erfindungsgemäßen Maßnahme. Der Ringraum läßt sich verglichen mit der durch Bohren erfolgten Herstellung der Sacklöcher mit relativ geringerem Aufwand durch Drehen herstellen. Darüber hinaus wird eine Erniedrigung des Kolbengewichts von bis zu 5 % erzielt.

Bei Kolben nach dem Oberbegriff des Anspruchs 2 wird durch das erfindungsgemäße Einfügen von Distanzstücken in den kühlkanalseitigen Abschnitt des Ringraums die Steifigkeit des Kolbenoberteils erhöht, so daß auf die zusätzliche äußere Abstützung des Kolbenoberteils am Unterteil verzichtet werden kann, was die Herstellung des Kolbens wesentlich vereinfacht und kostengünstiger gestaltet.

Aus dem französischen Patent Nr. 1.301.299 ist ein Kühlkanalkolben bekannt, bei dem der Kühlkanal durch mechanische Bearbeitung von der Kolbenbodenseite des gegossenen Kolbens her ausgebildet wird, indem eine konzentrisch zur Kolbenachse verlaufende Nut eingefräst wird, die anschließend durch eine aufgetragene Schweißnaht derart verschlossen wird, daß der ringförmige Kühlkanal verbleibt. Nach einer Ausführungsform wird ein kreisringförmiges Metallstück mit in den Kühlkanal erstreckten Vorsprüngen in die Nut eingeschweißt. Es handelt sich bei diesem Kolben jedoch um einen einteiligen Kolben mit einer vom Aufbau her stark abweichenden Kühlkanalgestaltung. Die bei der Herstellung einteiliger und gebauter Kolben zu berücksichtigenden Gesichtspunkte unterscheiden sich grundlegend.

Um die zu kühlende Oberfläche bei erfindungsgemäßen Kolben zu vergrößern, besitzt der dem Kolbenbodenrand nächstliegende Abschnitt des Ringraums eine gegenüber dem kühlraumseitigen bzw. kühlkanalseitigen Abschnitt um bis zu 60 % vergrößerte Oberfläche. Im Rahmen der Ausgestaltung der Erfindung sind die in den kühlraumseitigen bzw. kühlkanalseitigen Abschnitt des Ringraums eingefügten Distanzstücke, die eine Deformation der Ringpartie verhindern sollen, eingelötet, eingeschweißt oder in entsprechende Bohrungen eingeschraubt.

Die Erfindung ist in den Zeichnungen beispielhaft dargestellt und wird nachfolgend näher erläutert. Es zeigen:

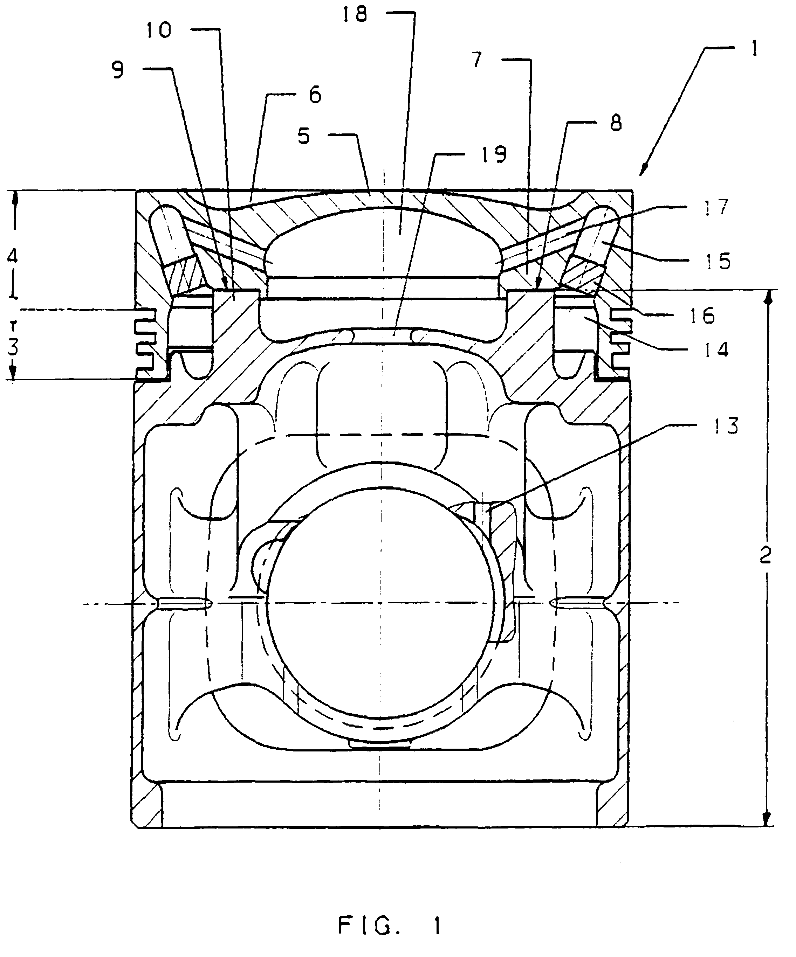

- Fig. 1: einen Schnitt durch einen gebauten, ölgekühlten Kolben für Dieselmotoren mit einem Aufbau nach Anspruch 2 entlang der die Kolbenachse und die Achse senkrecht zur Bolzenachsrichtung einschließenden Ebene und

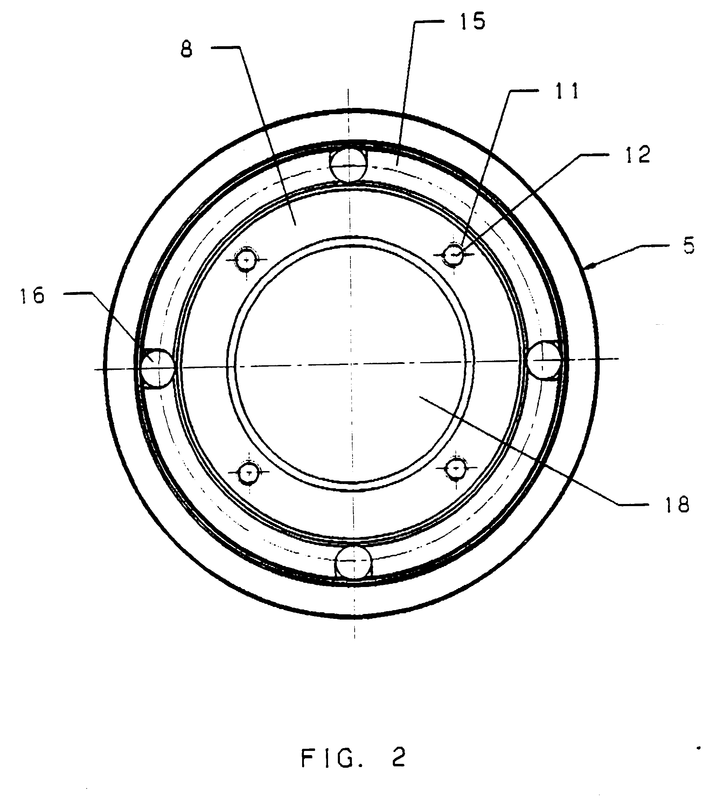

- Fig. 2: eine Draufsicht auf die Unterseite des Kolbenbodens.

Der gebaute, ölgekühlte Kolben (1) für mittelschnellaufende Dieselmotoren mit hoher Aufladung besteht aus dem den nicht dargestellten Kolbenbolzen aufnehmenden Unterteil (2) aus Gußeisen und dem aus Stahl geschmiedeten, die Ringpartie (3) und den Feuersteg (4) tragenden Kolbenboden (5) mit flacher Brennraummulde (6). Auf der Unterseite des Kolbenbodens befindet sich ein konzentrisch angeordneter Abstützbund (7) mit einer kreisringförmigen, senkrecht zur Bolzenachse liegenden Auflagefläche (8), die an der unmittelbar gegenüberliegenden, senkrecht zur Bolzenachse liegenden Auflagefläche (9) des auf der Oberseite des Unterteils (2) konzentrisch angebrachten Abstützbundes (10) anliegt. Das Unterteil (2) und der Kolbenboden (5) sind mittels vom Kolbenfuß her durch entsprechende Gewindebohrungen (11) geführte Dehnschrauben (12) gegeneinander verspannt. Die Kühlölzufuhr erfolgt über das nicht dargestellte Pleuel und den Kolbenbolzen und die Kühlölzuleitungsbohrungen (13) zu dem hinter der Ringpartie (3) verlaufenden, radial nach innen durch den Abstützbund (10) begrenzten, ringförmigen Kühlkanal (14), von dem sich ein Kühlraum (15) hinter den Feuersteg und den Kolbenbodenrand erstreckt, dessen Mittelebene gegenüber der Trennungsebene um 75° geneigt ist. In den Kühlraum (15) sind in dem dem Kühlkanal (14) zugewandten Abschnitt Distanzstücke (16) eingelötet. Der dem Kolbenbodenrand nächstliegende Abschnitt des Kühlraums (15) ist in der Weise vergrößert ausgebildet, daß eine gleichmäßige Wandstärke zwischen Kühlraum und Kolbenbodenrand, zwischen Kühlraum und Brennraummulde und zwischen Kühlraum und Feuersteg gegeben ist. Der ringförmige Kühlraum (15) ist über mehrere in dem Abstützbund (7) des Kolbenbodens angebrachte Überströmbohrungen (17) für das Kühlöl mit dem zentralen Kühlraum (18) verbunden, aus dem das Kühlöl über die öffnung (19) in den Kurbelraum austreten kann. Stattdessen ist es auch möglich, die überströmbohrungen (17) in dem Abstützbund (7) des Unterteils (2) anzuordnen.

Bei einer in der Zeichnung nicht dargestellten Ausführungsform nach Anspruch 1 erstreckt sich der ringförmige Kühlraum oder Ringraum nicht von einem Kühlkanal sondern von dem zentralen Kühlraum (18) aus bis in den Bereich hinter dem Feuersteg.

## Patentansprüche

1. Gebauter, ölgekühlter Kolben für Dieselmotoren, insbesondere für mittelschnellaufende Dieselmotoren mit hoher Aufladung, bestehend aus einem den Kolbenbolzen aufnehmenden Kolbenkörper und einem die Ringpartie und den Feuersteg tragenden Kolbenboden, die sich über in ihrer Trennungsebene liegende Auflageflächen aufeinander abstützen und die durch in entsprechende Bohrungen eingesetzte Schrauben gegeneinander verspannt sind, wobei zwischen Kolbenkörper und Kolbenboden ein zentraler, kurbelraumseitig mit einer Öffnung versehener Kühlraum besteht, gekennzeichnet durch einen vom Kühlraum ausgehenden, sich bis in den Bereich hinter dem Feuersteg und dem Kolbenbodenrand erstreckenden Ringraum, dessen Mittelebene gegenüber der Trennungsebene geneigt ist und in dessen kühlraumseitigen Abschnitt mehrere Distanzstücke fest eingefügt sind.

2. Gebauter, ölgekühlter Kolben (1) für Dieselmotoren, insbesondere für mittelschnellaufende Dieselmotoren mit hoher Aufladung, bestehend aus einem den Kolbenbolzen aufnehmenden Kolbenkörper (2) und einem die Ringpartie (3) und den Feuersteg (4) tragenden Kolbenboden, die sich über in ihrer Trennungsebene liegende, auf konzentrischen Abstützbunden (7, 10) angeordnete, kreisringförmige Auflageflächen (8, 9) aufeinander abstützen und die durch in entsprechende Bohrungen (11) eingesetzte Schrauben (12) gegeneinander verspannt sind, wobei die Abstützbunde die äußere Begrenzung eines zentralen Kühlraums (18) und die radial innere Begrenzung eines hinter der Ringpartie (3) verlaufenden Kühlkanals (14) bilden und der Kühlkanal über in einem der Abstützbunde angebrachte Überströmbohrungen (17) mit dem zentralen Kühlraum (18) verbunden ist, wobei vom Kühlkanal (14) ein sich bis in den Bereich hinter dem Feuersteg (4) und den Kolbenbodenrand erstreckender Ringraum (15), dessen Mittelebene gegenüber der Trennungsebene geneigt ist, ausgeht, dadurch gekennzeichnet, daß im kühlkanalseitigen Abschnitt des Ringraums (15) mehrere Distanzstücke (16) fest eingefügt sind.

3. Kolben nach den Ansprüchen 1 und 2, dadurch gekennzeichnet, daß die Mittelebene des Ringraums (15) um 20 bis 90°, vorzugsweise 30 bis 80°, gegenüber der Trennungsbene geneigt ist.

4. Kolben nach den Ansprüchen 1 bis 3, dadurch gekennzeichnet, daß der dem Kolbenbodenrand nächstliegende Abschnitt des Ringraums (15) eine gegenüber dem kühlraumseitigen bzw. kühlkanalseitigen Abschnitt vergrößerte Oberfläche besitzt.

5. Kolben nach den Ansprüchen 1 bis 4, dadurch gekennzeichnet, daß die Distanzstücke (16) eingelötet, eingeschweißt oder in entsprechende Bohrungen eingeschraubt sind.

## Claims

1. Built-up, oil-cooled piston for diesel engines, in particular for medium-speed diesel engines with high supercharging, comprising a piston body containing the gudgeon pin and a piston head carrying the rings and the top land, which support one another via bearing surfaces located at their division plane and which are braced against one another via screws located into corresponding drilled holes, whereby a central cooling chamber provided with an opening facing the crankcase exists between the piston body and the piston head, characterised by an annular chamber originating from the cooling chamber and extending into the area behind the top land and the edge of the piston head, the central plane of which is inclined against the division plane and into whose section on the side facing the cooling chamber several separators are firmly secured.

2. Built-up, oil-cooled piston (1) for diesel engines, in particular for medium-speed diesel engines with high supercharging, comprising a piston body (2) containing the gudgeon pin and a piston head carrying the rings (3) and the top land (4), which support one another via annular bearing surfaces (8, 9) located at their division plane and disposed on concentric support collars (7, 10) and which are braced against one another via screws (12) located into corresponding drilled holes (11), whereby the support collars form the outer limit of a central cooling chamber (18) and the radial inner limit of a cooling channel (14) running behind the rings (3) and the cooling channel is connected to the central cooling chamber (18) via overflow holes (17) drilled in the support collars, whereby an annular chamber (15), whose central plane is inclined against the division plane, and which extends into the area behind the top land (4) and the edge of the piston head, runs from the cooling channel (14), characterised in that several separators (16) are firmly secured in the section of the annular chamber (15) facing the cooling channel.

3. Piston according to claims 1 and 2, characterised in that the central plane of the annular chamber (15) is inclined against the division plane by 20 to 90°, preferably by 30 to 80°.

4. Piston according to claims 1 to 3, characterised in that the section of the annular chamber (15) lying closest to the edge of the piston head has a surface which is made larger than that of the section facing the cooling chamber or the cooling channel.

5. Piston according to claims 1 to 4, characterised in that the separators (16) are soldered in, welded in or screwed into corresponding drilled holes.

## Revendications

1. Piston (1) assemblé, refroidi par huile pour moteurs diesel, en particulier pour des moteurs diesel semi-rapides avec une suralimentation élevée, comportant un corps de piston (2) logeant l'axe du piston ainsi qu'un fond de piston (5) supportant la zone des segments (3) et la cloison de gorges de piston supérieure (4) qui s'appuient l'un sur l'autre par l'intermédiaire de surfaces d'appui (8, 9) situées dans leur plan de séparation et qui sont serrés l'un contre l'autre par des vis (12) insérées dans des alésages correspondants (11), une zone de refroidissement (18) centrale, dotée d'une ouverture du côté du carter de vilebrequin étant disposée entre le corps du piston (2) et le fond du piston (5), caractérisé par une zone annulaire (15) qui part de la zone de refroidissement (18), s'étend jusque dans la partie derrière la cloison de gorges de piston supérieure (4) et le bord du fond du piston, dont le plan médian est incliné par rapport au plan de séparation et dont la section du côté de la zone de refroidissement comprend plusieurs pièces d'écartement (16) insérées de manière fixe.

2. Piston (1) assemblé, refroidi par huile pour moteurs diesel, en particulier pour des moteurs diesel semi-rapides avec une suralimentation élevée, comportant un corps de piston (2) logeant l'axe du piston ainsi qu'un fond de piston (5) supportant la zone des segments (3) et la cloison de gorges de piston supérieure (4) qui s'appuient l'un sur l'autre par l'intermédiaire de surfaces d'appui (8, 9) en forme d'anneau circulaire, disposées sur des collerettes de support (7, 10) concentriques et situées dans leur plan de séparation et qui sont serrés l'un contre l'autre par des vis (12) insérées dans des alésages correspondants (11), les collerettes de support formant la limitation extérieure d'une zone centrale de refroidissement (18) et la limitation intérieure radiale d'un canal de refroidissement (14) passant derrière la zone des segments (3) et le canal de refroidissement étant assemblé avec la zone centrale de refroidissement (14) par l'intermédiaire d'alésages de décharge (17) placés dans l'une des collerettes de support, une zone annulaire (15) qui s'étend jusque dans la partie derrière la cloison de gorges du piston (4) et le bord du fond du piston et dont le plan médian est incliné par rapport au plan de séparation, partant du canal de refroidissement (14), caractérisé en ce que plusieurs pièces d'écartement (16) sont insérées de manière fixe dans la section du côté du canal de refroidissement de la zone annulaire (15).

3. Piston selon les revendications 1 et 2, caractérisé en ce que le plan médian de la zone annulaire (15) est incliné de 20 à 90°, de préférence de 30 à 80°, par rapport au plan de séparation.

4. Piston selon l'une quelconque des revendications 1 à 3, caractérisé en ce que la section de la zone annulaire (15) située immédiatement après le bord du fond du piston présente une surface agrandie par rapport à la section du côté de la zone de refroidissement ou du canal de refroidissement.

5. Piston selon l'une quelconque des revendications 1 à 4, caractérisé en ce que les pièces d'écartement (16) sont brasées, soudées ou vissées dans des alésages correspondants.
